# EUROPÄISCHE PATENTSCHRIFT

(11) **EP 2 243 582 B1**
(45) Veröffentlichungstag und Bekanntmachung des Hinweises auf die Patenterteilung: **01.05.2013**
(21) Anmeldenummer: 10002238.3
(22) Anmeldetag: 04.03.2010
(51) Int. Cl.: B23F 19/10, B23F 19/00

(54) **Verfahren und Vorrichtung zum Beseitigen eines Sekundärgrates an einem stirnverzahnten Werkstückrad**
Method and device for removing a secondary device on a frontally cogged workpiece wheel
Procédé et dispositif d'élimination d'un appareil secondaire sur une roue de pièce usinée interdigitée à l'avant

(30) Priorität: 22.04.2009 DE 102009018405
(43) Veröffentlichungstag der Anmeldung: 27.10.2010
(73) Patentinhaber: THE GLEASON WORKS, Rochester, New York 14607-1282 (US)
(72) Erfinder: Schäferling, Karl, 85716 Unterschleissheim (DE); Reichert, Gerhard, 82216 Maisach (DE); Oberlander,Stefan, 80339 München (DE)
(74) Vertreter: Leinweber & Zimmermann

(56) Entgegenhaltungen:
- EP-A1- 1 270 127
- DE-A1- 2 659 108
- DE-U1- 8 328 237
- DE-U1- 29 715 092
- US-A- 2 916 971

## Beschreibung

Die Erfindung bezieht sich auf ein Verfahren zum Beseitigen eines Sekundärgrates an einem verzahnten Werkstückrad, der durch eine Umarbeitung einer endseitigen Zahnkante eines Zahns in eine eine Endfläche und eine Zahnflanke des Zahns verbindende Fase in einem an die Fase angrenzenden Randbereich der Zahnflanke aufgeworfen wird, bei dem die Zahnflanken des Werkstückrades mit Zahnflanken eines verzahnten Werkzeugrades drehend in Zahneingriff gebracht werden, sowie auf eine zur Durchführung dieses Verfahrens geeignete Vorrichtung.

Bei der spanenden Herstellung von Verzahnungen entsteht an den endseitigen Zahnkanten ein Grat, der aus verschiedenen Gründen beseitigt werden muß. Einer der Gründe liegt darin, daß eine Stirnfläche des Zahnrads in nachfolgenden Arbeitsgängen oft als planare Spann- oder Bestimmungsfläche dienen soll, deren Planarität durch den Grat gestört wird. Weiterhin würde der Grat nach der Härtung die Gefahr nach sich ziehen, daß er beim späteren Lauf des Zahnrades in einem Getriebe abspringt und eine Beschädigung der Zahnflanken oder von Getriebebauteilen herbeiführt. Davon abgesehen stellt ein solcher Grat auch eine Verletzungsgefahr bei der Handhabung der Werkstückräder dar. Weiterhin ist es nicht ausreichend, lediglich den Grat zu beseitigen, weil die verbleibende Zahnkante beim Härten durch Überkohlung glashart werden kann und dann unter Belastung ausbricht.

Deshalb wird bei einem bekannten Verfahren der eingangs genannten Art (EP 1 270 127 A1) die Zahnkante in eine Fase umgeformt, indem Material des Werkstückrades im Bereich der endseitigen Zahnkante durch ein damit in Zahneingriff abwälzendes Anfasrad verdrängt wird. Bei dieser plastischen Umformung wird jedoch in dem an die Fase angrenzenden Randbereich der Zahnflanke ein Sekundärgrat aufgeworfen. Dieser Sekundärgrat stellt ein großes Problem für die nachfolgende Hartbearbeitung, beispielsweise durch Honen oder Schleifen, dar. Er führt zu einer vorzeitigen Abnutzung des Hartbearbeitungswerkzeugs und erfordert entsprechend häufige Abrichtvorgänge des Nachbearbeitungswerkzeugs. Deshalb wird bei dem genannten Stand der Technik das Werkstückrad mit einem verzahnten Glättrad in Zahneingriff gebracht, wodurch der Sekundärgrat durch Nachdrücken glattgewalzt werden soll. Allerdings ist hier eine vollständig zufriedenstellende Beseitigung des Sekundärgrates nicht erreichbar. DE 8328237 beschreibt ebenfalls das Problem der Sekundärgrate und schlägt deren Beseitigung durch spanlases Glätten mit einem Bereich von verbreiteten Zähnen eines Bearbeitungsrads.

Die hierin verwendeten Ausdrücke "verzahnt" und "Verzahnung" bezeichnen beliebige Außen- oder Innenverzahnungen, bei denen der Zahneingriff abwälzend erfolgt. Insbesondere können die Verzahnungen zylindrisch oder kegelförmig sein.

Der Erfindung liegt die Aufgabe zugrunde, ein Verfahren und eine Vorrichtung der eingangs genannten Art zu schaffen, die eine verbesserte Beseitigung des Sekundärgrates ermöglichen.

Erfindungsgemäß wird diese Aufgabe hinsichtlich des Verfahrens dadurch gelöst, daß die Beseitigung des Sekundärgrates durch eine von dem Zahneingriff hervorgerufene Schneidbewegung einer auf einer Zahnflanke des Werkzeugrades ausgebildeten und sich in der Zannbreitenrichtung erstreckenden Schneidkante erfolgt.

Bei dem erfindungsgemäßen Verfahren werden also die Sekundärgrate nicht drückend glattgewalzt, sondern durch die Schneidbewegung der Schneidkante spanend abgetragen. Durch den kämmenden Zahneingriff zwischen dem Werkstückrad und dem Werkzeugrad erfolgt die Schneidbewegung im wesentlichen in der Zahnhöhenrichtung über den Randbereich der Zahnflanke, in dem der Sekundärgrat aufgeworfen worden ist. Diese Schneidbewegung kann in der Richtung vom Zahnkopf zum Zahnfuß hin oder in der dazu entgegengesetzten Richtung erfolgen. Weiterhin kann jeder Zahn des Werkzeugrades sowohl an seiner Linksflanke als auch an seiner Rechtsflanke eine derartige Schneide aufweisen. In diesem Fall werden die Links- und Rechtsflanken aufeinanderfolgender Zähne des Werkstückrades unmittelbar aufeinanderfolgend von ihren Sekundärgraten befreit.

Die Umarbeitung der Zahnkanten in ihre Fasen kann durch Umformen oder durch Schneiden erfolgen; in beiden Fällen entsteht der Sekundärgrat. In einer Ausführungsform des erfindungsgemäßen Verfahrens ist gemäß dem erstgenannten Fall vorgesehen, daß die Umarbeitung der endseitigen Zahnkante des Werkstückrades durch deren plastische Verformung mittels eines damit kämmenden Zahns eines verzahnten Anfasrades erfolgt. Dabei entspricht der Schrägungswinkel der Zähne des Anfasrades in seinem mit dem Werkstückrad in Zahneingriff gelangenden Bereich der zu erzeugenden Fase des Werkstückrades.

In vorrichtungsmäßiger Hinsicht wird die der Erfindung zugrundeliegende Aufgabe durch eine Vorrichtung zum Beseitigen eines Sekundärgrates an einem verzahnten Werkstückrad, der durch eine Umarbeitung einer endseitigen Zahnkante eines Zahns in eine eine Endfläche und eine Zahnflanke des Zahns verbindende Fase in einem an die Fase angrenzenden Randbereich der Zahnflanke aufgeworfen ist, mit einem verzahnten Werkzeugrad, dessen Zahnflanken mit den Zahnflanken des Werkstückrades drehend in Zahneingriff bringbar sind, erfindungsgemäß dadurch gelöst, daß auf einer Zahnflanke des Werkzeugrades in einem mit dem Randbereich der Zahnflanke des Werkstückrades in Zahneingriff bringbaren Flankenbereich eine sich in der Zahnbreitenrichtung erstreckende Schneidkante ausgebildet ist.

Bei der erfindungsgemäß ausgebildeten Vorrichtung bewegt sich die Schneidkante beim Zahneingriff im wesentlichen in der Zahnhöhenrichtung über den den Sekundärgrat aufweisenden Randbereich der Zahnflanke des Werkstückrades hinweg und schneidet dadurch den Sekundärgrat ab. Vorzugsweise ist sowohl die Linksflanke als auch die Rechtsflanke jedes Zahns des Werkzeugrades mit mindestens einer derartigen Schneide versehen, die infolge dieser Anordnung nacheinander mit den Linksflanken und Rechtsflanken aufeinanderfolgender Zähne des Werkstückrades in Schneideingriff gelangen.

Vorzugsweise ist vorgesehen, daß die Zahnflanken des Werkzeugrades in der Zahnbreitenrichtung hohl gewölbt sind. Durch diese Hohlwölbung wird sichergestellt, daß der Bearbeitungsangriff des Werkzeugrades nur an den die Sekundärgrate aufweisenden Randbereichen der Zahnflanken stattfindet, während die sich von dort aus in der Zahnbreitenrichtung zur Zahnmitte hin erstreckenden Bereiche der Zahnflanken von dem Werkzeugrad nicht berührt werden und deshalb keinerlei Bearbeitung erfahren.

Im Rahmen der Erfindung ist insbesondere vorgesehen, daß die Schneidkante durch einen Abschnitt einer von der Zahnflanke begrenzten Randkante einer zu der Zahnflanke hin offenen Ausnehmung des Zahns des Werkzeugrades gebildet ist. Hierbei stellt der an den die Schneide bildenden Abschnitt der Randkante angrenzende Bereich der Zahnflanke die Freifläche und der an diesen Abschnitt angrenzende Wandungsbereich der Ausnehmung die Spanfläche der Schneidkante dar.

Vorzugsweise ist vorgesehen, daß die Zahnflanke des Werkzeugrades mehrere in der Zahnhöhenrichtung voneinander beabstandete Schneidkanten aufweist. Diese Schneidkanten können beim Zahneingriff auf in der Zahnhöhenrichtung aufeinanderfolgende unterschiedliche Abschnitte des Sekundärgrates einwirken. Durch eine entsprechende Wahl des Verhältnisses zwischen der Anzahl der Zähne des Werkzeugrades und der Anzahl der Zähne des Werkstückrades läßt sich sicherstellen, daß jedenfalls nach einer ausreichenden Anzahl von Umdrehungen eine vollständige Überdeckung zwischen den Bewegungswegen dieser Schneidkanten und dem Sekundärgrat stattfindet, so daß letzterer vollständig abgeschnitten wird.

Eine vorteilhafte Ausführungsform zeichnet sich ferner dadurch aus, daß jede Ausnehmung zu der ihr benachbarten Endfläche des Zahns des Werkzeugrades hin offen ist und sich von der Linksflanke des Zahns bis zu dessen Rechtsflanke erstreckt. Dadurch lassen sich die Ausnehmungen in einfacher Weise durch eine Materialabtragung von der Stirnfläche des Werkzeugrades her ausbilden. Auf ihre Querschnittsform in ihrer zum Stirnschnitt orthogonalen Schnittansicht kommt es im einzelnen nicht an, solange durch ihre Form die Bildung der Schneidkanten zur Entfernung der Sekundärgrate sichergestellt ist.

In diesem Zusammenhang hat es sich als vorteilhaft erwiesen, daß die Ausnehmungen im Stirnschnitt auf einem Gang einer Spirale liegen. Dabei kann vorgesehen sein, daß die Spirale mehrgängig ist. Beispielsweise liegt die Zahl der Gänge zwischen 3 und 7. Alternativ könnten die Ausnehmungen im Stirnschnitt auch auf einem oder mehreren Kreisbögen liegen. In allen diesen Fällen wird das zu ihrer Herstellung verwendete Werkzeug unter axialem Vorschub längs einer entsprechenden Bahnkurve relativ zur Stirnfläche des Werkzeugrades bewegt.

Gemäß einem weiteren Gedanken der Erfindung ist vorgesehen, daß das Werkzeugrad mit einem dazu koaxialen, verzahnten Anfasrad drehfest verbunden ist, dessen mit den Zahnkanten des Werkstückrades in Eingriff bringbaren Zähne einen der Fase entsprechenden Schrägungswinkel aufweisen. Durch die Drehung des Werkstückrades im kämmenden Eingriff mit dieser das Werkzeugrad und das Anfasrad kombinierenden Einrichtung erfolgt in ein und demselben Vorgang sowohl die Anfasung als auch die Sekundärgratbeseitigung. Dabei kann insbesondere vorgesehen sein, daß die Zähne des Anfasrades nur auf einem Teilabschnitt seines Umfangs vorgesehen sind. Ferner genügt es, wenn die Zähne des Werkzeugrades nur auf einem von diesem Teilabschnitt verschiedenen Teilabschnitt seines Umfangs mit den Schneidkanten versehen sind. Auch in diesem Fall kann durch eine entsprechende Anzahl von Umdrehungen und eine geeignete Wahl des Verhältnisses zwischen der Anzahl der Zähne des Anfasrades und der Anzahl der Zähne des Werkstückrades stets sichergestellt werden, daß letzteres an allen seinen Zähnen mit der Fase versehen wird.

Weitere Merkmale, Einzelheiten und Vorteile der Erfindung ergeben sich aus der folgenden Beschreibung, in der die Erfindung unter Bezugnahme auf die Zeichnung beispielhaft erläutert ist. Hierin zeigen:
- Fig. 1: eine perspektivische Ansicht eines Ausführungsbeispiels eines stirnverzahn- ten Werkzeugrades
- Fig. 2: eine stirnseitige Ansicht des Werkzeugrades von Fig. 1,
- Fig. 3: einen Schnitt längs der Linie A-A in Fig. 2, und
- Fig. 4: einen Ausschnitt aus Fig. 3 in vergrößerter Darstellung.

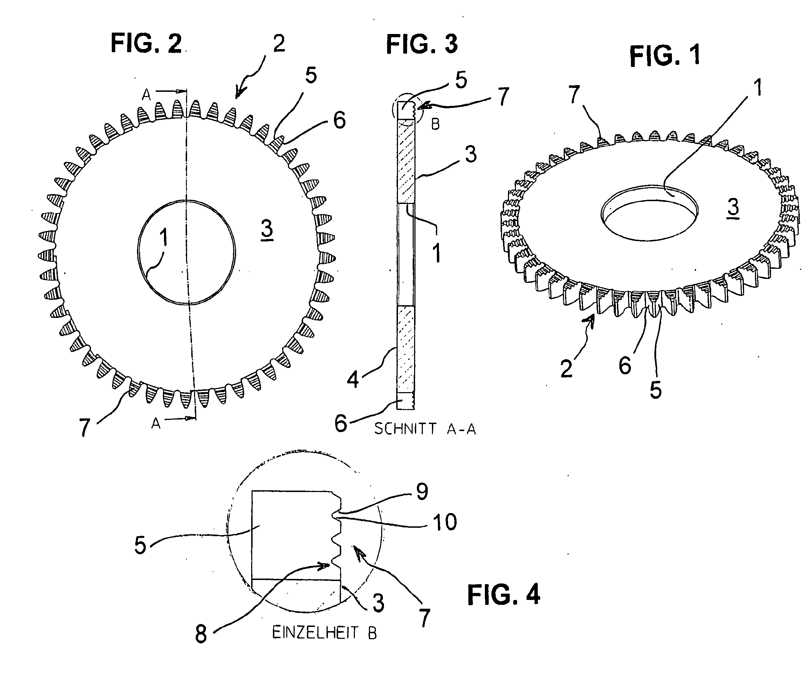

Ein in der Zeichnung in verschiedenen Ansichten dargestelltes zylindrisch verzahntes Werkzeugrad weist eine zu seiner Drehachse koaxiale zylindrische Nabenfläche 1 zur Aufnahme einer seiner drehenden Lagerung dienenden Welle oder Achse, eine zu seiner Drehachse koaxiale Verzahnung mit einer Anzahl von Zähnen 2 und zwei zu seiner Drehachse orthogonale Stirnflächen 3, 4 auf, die sich von der Nabenfläche 1 aus radial bis zum Kopfkreis der Verzahnung erstrecken. Jeder Zahn 2 weist eine linke Zahnflanke 5 und eine rechte Zahnflanke 6 auf, die in den Fig. 3 und 4 in einer zur Drehachse orthogonalen Aufsicht erscheinen.

Die Stirnfläche 3 verläuft in ihrem sich zwischen der Nabenfläche 1 und dem Fußkreis der Verzahnung erstreckenden Bereich vollständig eben. Dagegen sind in ihrem sich zwischen dem Fußkreis und dem Kopfkreis der Verzahnung erstreckenden, die Endflächen der Zähne 2 bildenden Bereich die Zähne 2 mit rillenartigen Ausnehmungen 7 versehen. Diese Ausnehmungen 7 erstrecken sich an jedem Zahn 2 im Stirnschnitt gesehen von dessen linker Zahnflanke 5 bis zu dessen rechter Zahnflanke 6. Dadurch begrenzen die Ausnehmungen 7 auf der jeweiligen Zahnflanke 5, 6 eine Randkante 8, deren sich in der Zahnbreitenrichtung erstreckende Abschnitte 9, 10 jeweils eine Schneidkante bilden. Dabei stellen die an die Schneidkanten 9, 10 angrenzenden Bereiche der Zahnflanken 5, 6 die zu der Schneidkante gehörende Freifläche und die an die Schneidkanten 9, 10 angrenzenden Wandungsbereiche der Ausnehmungen 7 die zugehörige Spanfläche dar.

Die Zeichnung läßt ferner erkennen, daß die Ausnehmungen 7 aller Zähne 2 auf um die Drehachse zentrierten bogenförmigen Kurvenabschnitten liegen. Insbesondere kann es sich dabei um Kreisbogenabschnitte oder Gänge einer Spirale handeln. In ihrem zur Stirnschnittebene orthogonalen Querschnitt, wie er beispielsweise in Fig. 4 erscheint, ist die Form der Ausnehmungen 7 weitgehend beliebig; es ist lediglich erforderlich, daß die durch die Ausnehmungen 7 bestimmten Randkanten 8 mindestens einen Abschnitt 9, 10 aufweisen, der sich in Richtung auf das der Stirnseite 3 entgegengesetzte stirnseitige Ende des betreffenden Zahns 2 erstreckt.

Das in der Zeichnung dargestellte Werkzeugrad dient zur Bearbeitung eines zylindrisch verzahnten Werkstückrades (nicht dargestellt), dessen endseitige Zahnkanten jeweils in eine Fase umgearbeitet worden sind, welche die betreffende Zahnflanke mit der Endfläche des Zahns verbindet, wobei durch diese Umarbeitung jeweils in dem an die Fase angrenzenden Randbereich der Zahnflanke ein Sekundärgrat aufgeworfen worden ist. Hierzu wird für die Bearbeitung das in der Zeichnung dargestellte Werkzeugrad mit dem zu bearbeitenden Werkstückrad drehend in Zahneingriff gebracht. Dabei wird die axiale Stellung zwischen dem Werkstückrad und dem Werkzeugrad derart gewählt, daß die mit den Schneidkanten 9, 10 versehenen Flankenbereiche des Werkzeugrades mit den die Sekundärgrate aufweisenden Randbereichen der Zahnflanken des Werkstückrades in Eingriff gelangen. Dadurch laufen die Schneidkanten 9, 10 in einer im wesentlichen längs der Zahnhöhenrichtung des Werkstückrades erfolgenden Schneidbewegung spanend über die Sekundärgrate des Werkstückrades hinweg, so daß nach einigen Umdrehungen die Sekundärgrate im wesentlichen beseitigt sind.

Das in der Zeichnung dargestellte Werkzeugrad ist nur an seiner einen Stirnfläche 3 mit den die Schneidkanten 9, 10 bildenden Ausnehmungen 7 versehen, während die andere Stirnfläche 4 vollständig plan ist. An diese plane Stirnfläche 4 kann in spiegelbildlicher Anordnung ein gemäß der Zeichnung ausgebildetes weiteres Werkzeugrad mit seiner planen Stirnfläche 4 angeschlossen werden. In diesem Fall können die in den beiden flankenseitigen Endbereichen der Werkstückradzähne aufgeworfenen Sekundärgrate gleichzeitig beseitigt werden. Dies setzt jedoch voraus, daß die Summe der axialen Dicken der beiden aneinander angeschlossenen Werkzeugräder dem axialen Abstand der die Sekundärgrate aufweisenden Randbereiche der Zahnflanken des Werkstückrades entspricht. Es versteht sich, daß die entsprechende Anpassung durch Distanzscheiben erfolgen kann, welche zwischen die einander zugewandten Stirnflächen 4 der beiden Werkzeugräder eingefügt werden. Durch eine geeignete axiale Dimensionierung kann diese Ausführungsform auch einstückig ausgebildet werden, indem die Ausnehmungen 7 an beiden Stirnflächen 3, 4 vorgesehen werden.

Alternativ ist es auch möglich, zwei gemäß der Zeichnung ausgebildete Werkzeugräder unter einem für eine beidseitige Beseitigung der Sekundärgrate geeigneten Abstand derart einander koaxial gegenüberzustellen, daß ihre die Ausnehmungen 7 aufweisenden Stirnflächen 3 einander zugewandt sind.

Da der Flankeneingriff zwischen dem Werkzeugrad und dem Werkstückrad nur in den die Sekundärgrate aufweisenden Randbereichen der Zahnflanken erforderlich und erwünscht ist, können die Zähne 2 des Werkzeugrades derart gestaltet sein, daß ihre Zahndicke in der Zahnbreitenrichtung zur Zahnmitte hin abnimmt. Beispielsweise kann dies dadurch geschehen, daß die Zähne 2 des Werkstückrades hohl geschliffen werden.

Die Verzahnung des in der Zeichnung dargestellten Werkzeugrades ist eine Geradverzahnung. Diese ist für die Bearbeitung von geradverzahnten Werkstückrädern geeignet. Für schrägverzahnte Werkstückräder wird das Werkzeugrad mit einem entsprechenden Schrägungswinkel ausgelegt.

Weiterhin kann an die mit den Ausnehmungen 7 versehenen Stirnflächen 3 ein zu dem Werkstückrad koaxiales Anfasrad angeschlossen werden, das in seinem Aufbau und seiner Funktion dem in EP 1 270 127 A1 offenbarten Wälzentgratrad entspricht. Dieses Anfasrad (nicht dargestellt) ist über die Gesamtheit oder einen Teil seines Umfangs mit Zähnen versehen, deren Schrägungswinkel der an dem Werkstückrad zu erzeugenden Phase entspricht. Durch diese Kombination des Werkzeugrades mit dem durch seinen kämmenden Eingriff mit den Zahnkanten des Werkstückrades deren Umformung bewirkenden Anfasrad kann in ein und demselben Arbeitsgang sowohl die Anfasung der Zahnkanten als auch die Beseitigung der dadurch aufgeworfenen Sekundärgrate erfolgen.

### Liste der Bezugszeichen

- 1: Nabenfläche
- 2: Zähne
- 3, 4: Stirnflächen
- 5, 6: Zahnflanken
- 7: Ausnehmungen
- 8: Randkante
- 9, 10: Schneidkanten

## Patentansprüche

1. Verfahren zum Beseitigen eines Sekundärgrates an einem verzahnten Werkstückrad, der durch eine Umarbeitung einer endseitigen Zahnkante eines Zahns in eine eine Endfläche und eine Zahnflanke des Zahns verbindende Fase in einem an die Fase angrenzenden Randbereich der Zahnflanke aufgeworfen wird, bei dem die Zahnflanken des Werkstückrades mit Zahnflanken eines verzahnten Werkzeugrades drehend in Zahneingriff gebracht werden, **dadurch gekennzeichnet, daß** die Beseitigung des Sekundärgrates durch eine von dem Zahneingriff hervorgerufene Schneidbewegung einer auf einer Zahnflanke (5, 6) des Werkzeugrades ausgebildeten und sich in der Zahnbreitenrichtung erstreckenden Schneidkante (9, 10) erfolgt.

2. Verfahren nach Anspruch 1, **dadurch gekennzeichnet, daß** die Umarbeitung der Zahnkante des Werkstückrades durch deren plastische Umformung mittels eines damit kämmenden Zahns eines verzahnten Anfasrades erfolgt.

3. Vorrichtung zum Beseitigen eines Sekundärgrates an einem verzahnten Werkstückrad, der durch eine Umarbeitung einer endseitigen Zahnkante eines Zahns in eine eine Endfläche und eine Zahnflanke des Zahns verbindende Fase in einem an die Fase angrenzenden Randbereich der Zahnflanke aufgeworfen ist, mit einem verzahnten Werkzeugrad, dessen Zahnflanken (5, 6) mit den Zahnflanken des Werkstückrades drehend in Zahneingriff bringbar sind, **dadurch gekennzeichnet, daß** auf einer Zahnflanke (5, 6) des Werkzeugrades in einem mit dem Randbereich der Zahnflanke des Werkstückrades in Zahneingriff bringbaren Flankenbereich eine sich in der Zahnbreitenrichtung erstreckende Schneidkante (9, 10) ausgebildet ist.

4. Vorrichtung nach Anspruch 3, **dadurch gekennzeichnet, daß** die Zahnflanken (5, 6) des Werkzeugrades in der Zahnbreitenrichtung hohl gewölbt sind.

5. Vorrichtung nach Anspruch 3 oder 4, **dadurch gekennzeichnet, daß** die Schneidkante (9, 10) durch einen Abschnitt einer von der Zahnflanke (5, 6) begrenzten Randkante (8) einer zu der Zahnflanke hin offenen Ausnehmung (7) des Zahns (2) des Werkzeugrades gebildet ist.

6. Vorrichtung nach einem der Ansprüche 3 bis 5, **dadurch gekennzeichnet, daß** die Zahnflanke (5, 6) des Werkstückrades mehrere in der Zahnhöhenrichtung voneinander beabstandete Schneidkanten (9, 10) aufweist.

7. Vorrichtung nach einem der Ansprüche 3 bis 6, **dadurch gekennzeichnet, daß** jede Ausnehmung (7) zu der ihr benachbarten Endfläche (3) des Zahns (2) des Werkzeugrades hin offen ist und sich von der Linksflanke (5) des Zahns (2) bis zu dessen Rechtsflanke (6) erstreckt.

8. Vorrichtung nach Anspruch 7, **dadurch gekennzeichnet, daß** die Ausnehmungen (7) im Stirnschnitt auf einem Gang einer Spirale liegen.

9. Vorrichtung nach Anspruch 8, **dadurch gekennzeichnet, daß** die Spirale mehrgängig ist.

10. Vorrichtung nach einem der Ansprüche 7 bis 9, **dadurch gekennzeichnet, daß** die Verzahnung des Werkzeugrades eine von zwei radialen Stirnflächen (3, 4) des Werkzeugrades begrenzte, zylindrische Außenverzahnung ist.

11. Vorrichtung nach Anspruch 10, **dadurch gekennzeichnet, daß** die Ausnehmungen (7) nur an einer der beiden Stirnflächen (3) vorgesehen und die andere Stirnfläche (4) plan ist.

12. Vorrichtung nach Anspruch 10, **dadurch gekennzeichnet, daß** die Ausnehmungen (7) an beiden Stirnflächen (3, 4) vorgesehen sind.

13. Vorrichtung nach einem der Ansprüche 3 bis 12, **dadurch gekennzeichnet, daß** das Werkzeugrad mit einem dazu koaxialen, verzahnten Anfasrad drehfest verbunden ist, dessen mit den Zahnkanten des Werkstückrades in Eingriff bringbaren Zähne einen der Fase entsprechenden Schrägungswinkel aufweisen.

14. Vorrichtung nach Anspruch 13, **dadurch gekennzeichnet, daß** die Zähne des Anfasrades nur auf einem Teilabschnitt seines Umfangs vorgesehen sind.

## Claims

1. A method for removing a secondary burr on a toothed workpiece wheel which is created by the reworking of an end-side tooth edge of a tooth into a chamfer connecting an end face and a tooth flank of the tooth in an edge region of the tooth flank adjacent to the chamfer, wherein the tooth flanks of the workpiece wheel are meshed while rotating with tooth flanks of a toothed tool wheel, **characterised in that** the removal of the secondary burr is implemented by a cutting movement, brought about by the meshing, of a cutting edge (9, 10) formed on a tooth flank (5, 6) of the tool wheel and extending in the direction of the width of the tooth.

2. The method according to Claim 1, **characterised in that** the tooth edge of the workpiece wheel is reworked by the plastic reshaping of said tooth edge by means of a tooth of a toothed chamfering wheel meshing therewith.

3. A device for removing a secondary burr on a toothed workpiece wheel which is created by the reworking of an end-side tooth edge of a tooth into a chamfer connecting an end face and a tooth flank of the tooth in an edge region of the tooth flank adjacent to the chamfer, with a toothed tool wheel the tooth flanks (5, 6) of which can be meshed while rotating with the tooth flanks of the workpiece wheel, **characterised in that** on one tooth flank (5, 6) of the tool wheel in a flank region that can be meshed with the edge region of the tooth flank of the workpiece wheel a cutting edge (9, 10) extending in the direction of the width of the tooth is formed.

4. The device according to Claim 3, **characterised in that** the tooth flanks (5, 6) of the tool wheel are concave in the direction of the width of the tooth.

5. The device according to Claim 3 or 4, **characterised in that** the cutting edge (9, 10) is formed by a section of a marginal edge (8) of a recess (7) of the tooth (2) of the tool wheel, which is delimited by the tooth flank (5, 6) and open toward the tooth flank.

6. The device according to any of Claims 3 to 5, **characterised in that** the tooth flank (5, 6) of the work piece wheel has a number of cutting edges (9, 10) spaced apart from one another in the direction of the depth of the tooth.

7. The device according to any of Claims 3 to 6, **characterised in that** each recess (7) is open toward the adjacent end face (3) of the tooth (2) of the tool wheel and extends from the left flank (5) of the tooth (2) to its right flank (6).

8. The device according to Claim 7, **characterised in that** the recesses (7) are positioned in the transverse section on a thread of a spiral.

9. The device according to Claim 8, **characterised in that** the spiral is multi-threaded.

10. The device according to any of Claims 7 to 9, **characterised in that** the toothing of the tool wheel is cylindrical external toothing delimited by two radial end faces (3, 4) of the tool wheel.

11. The device according to Claim 10, **characterised in that** the recesses (7) are provided on only one of the two end faces (3) and the other end face (4) is planar.

12. The device according to Claim 10, **characterised in that** the recesses (7) are provided on both end faces (3, 4).

13. The device according to any of Claims 3 to 12, **characterised in that** the tool wheel is non-rotatably connected to a toothed chamfering wheel coaxial to the latter, the teeth of which that can mesh with the tooth edges of the workpiece wheel have a helix angle that corresponds to the chamfer.

14. The device according to Claim 13, **characterised in that** the teeth of the chamfering wheel are only provided on a partial section of its circumference.

## Revendications

1. Procédé d'élimination d'une bavure secondaire sur une roue dentée à usiner, laquelle a été créée suite à une retouche d'une arête terminale d'une dent visant à produire un chanfrein reliant une surface terminale et un flanc de la dent, dans une zone périphérique du flanc de dent bordant ledit chanfrein, dans lequel procédé les flancs de dent de la roue à usiner sont amener à s'engrener, par rotation, avec les flancs de dent d'une roue dentée formant outil, **caractérisé en ce que** l'élimination de la bavure secondaire est réalisée grâce au mouvement de coupe, produit par l'engrènement, d'une arête de coupe (9, 10) qui est constituée sur un flanc de dent (5, 6) de la roue formant outil et qui s'étend dans le sens de la largeur de la dent.

2. Procédé selon la revendication 1, **caractérisé en ce que** la retouche de l'arête de dent de la roue à usiner se produit par la transformation plastique de celle-ci au moyen d'une dent d'une roue à chanfreiner dentée venant s'engrener avec celle-ci.

3. Dispositif d'élimination d'une bavure secondaire sur une roue dentée à usiner, laquelle a été créée suite à une retouche d'une arête terminale d'une dent visant à produire un chanfrein reliant une surface terminale et un flanc de la dent, dans une zone périphérique du flanc de dent bordant ledit chanfrein, au moyen d'une roue dentée formant outil dont les flancs de dent (5, 6) peuvent être amenés à s'engrener, par rotation, avec les flancs de dent de la roue à usiner, **caractérisé en ce que**, sur un flanc de dent (5, 6) de la roue formant outil, dans une zone du flanc susceptible d'être amenée à s'engrener avec la zone périphérique du flanc de dent de la roue à usiner, il est constitué une arête de coupe (9, 10) qui s'étend dans le sens de la largeur de la dent.

4. Dispositif selon la revendication 3, **caractérisé en ce que** les flancs de dent (5, 6) de la roue formant outil sont concaves dans le sens de la largeur de la dent.

5. Dispositif selon la revendication 3 ou 4, **caractérisé en ce que** l'arête de coupe (9, 10) est constituée par une section d'une arête périphérique (8), délimitée par le flanc de dent (5, 6), d'une entaille (7) de la dent (2) de la roue formant outil, laquelle entaille est ouverte vers le flanc de dent.

6. Dispositif selon l'une des revendications 3 à 5, **caractérisé en ce que** le flanc de dent (5, 6) de la roue à usiner présente plusieurs arêtes de coupes (9, 10) espacées les unes des autres dans le sens de la hauteur de la dent.

7. Dispositif selon l'une des revendications 3 à 6, **caractérisé en ce que** chaque entaille (7) est ouverte vers la surface terminale (3) de la dent (2) de la roue formant outil qui lui est directement voisine, et se prolonge depuis le flanc gauche (5) de la dent (2) jusqu'à son flanc droit (6).

8. Dispositif selon la revendication 7, **caractérisé en ce que** les entailles (7), en coupe frontale, se situent sur une piste d'une spirale.

9. Dispositif selon la revendication 8, **caractérisé en ce que** la spirale comprend plusieurs pistes.

10. Dispositif selon l'une des revendications 7 à 9, **caractérisé en ce que** la denture de la roue formant outil est une denture extérieure cylindrique délimitée par deux faces frontales (3, 4) radiales de la roue formant outil.

11. Dispositif selon la revendication 10, **caractérisé en ce que** les entailles (7) ne sont prévues que sur l'une des deux faces frontales (3), l'autre face frontale (4) étant plane.

12. Dispositif selon la revendication 10, **caractérisé en ce que** les entailles (7) sont prévues sur les deux faces frontales (3, 4).

13. Dispositif selon l'une des revendications 3 à 12, **caractérisé en ce que** la roue formant outil est solidaire en rotation d'une roue à chanfreiner dentée qui lui est coaxiale et dont les dents susceptibles d'être mises en prise avec les arêtes de dent de la roue à usiner présentent un angle d'hélice correspondant au chanfrein.

14. Dispositif selon la revendication 13, **caractérisé en ce que** les dents de la roue à chanfreiner ne sont prévues que sur une section partielle de son pourtour.
